# EUROPÄISCHE PATENTSCHRIFT

(11) **EP 2 774 469 B1**
(45) Veröffentlichungstag und Bekanntmachung des Hinweises auf die Patenterteilung: **24.02.2016**
(21) Anmeldenummer: 14000738.6
(22) Anmeldetag: 01.03.2014
(51) Int. Cl.: A01D 34/416, B65H 49/06, B65H 75/28, B65H 75/44

(54) **Spulenträger für eine Schneidfadenspule**
Coil carrier for a cutting thread coil
Support de bobine pour une bobine de fil de coupe

(30) Priorität: 05.03.2013 US 201313785585
(43) Veröffentlichungstag der Anmeldung: 10.09.2014
(73) Patentinhaber: Andreas Stihl AG & Co. KG, 71336 Waiblingen (DE)
(72) Erfinder: Schilling, Thorsten, Virginia Beach, VA 23456 (US); Pearson, Robert Jamieson, Norfolk, VA 23502 (US); Smagin, Vladimir A., Virginia Beach, VA 23464 (US); Garstenauer, Andreas, Chesapeake, VA 23320 (US)
(74) Vertreter: Wasmuth, Rolf

(56) Entgegenhaltungen:
- WO-A1-2008/123001
- US-A- 4 550 498
- US-B1- 6 519 857
- US-S1- D 524 643

## Beschreibung

Die Erfindung betrifft einen Spulenträger mit einer Spule aus einem Schneidfaden für einen Freischneider.

Aus der EP 1 446 002 B1 ist ein Fadenmähkopf bekannt, der mit einem im Schneidkopf geklemmt gehaltenen Schneidfäden arbeitet. Ist ein Schneidfaden verbraucht, wird er gegen einen neuen Schneidfadenabschnitt ausgetauscht. Hierzu muss der Benutzer eine Vorratsrolle an Schneidfaden mitführen, von der er bei Bedarf die notwendige Länge eines Schneidfadens abtrennt und dann am Schneidkopf einsetzt. Die mitzuführende Vorratsspule eines Schneidfadens ist dabei an einem Spulenträger gehalten.

Aus der US D524,643 S ist eine Verpackung für eine Spule eines Schneidfadens bekannt, die als Blister-Verpackung ausgeführt ist. Die Spule des Schneidfadens wird getrennt von der Verpackung gewickelt und dann in die Blister-Verpackung eingelegt. Dies ist manuell aufwendig und zeitintensiv. Soll ein Abschnitt des Schneidfadens entnommen werden, muss die Verpackung geöffnet, der gewünschte Schneidfadenabschnitt abgewickelt und abgeschnitten wird und die Verpackung wieder geschlossen werden. Dabei kommt es vor, dass die Spule ungewollt abwickelt, so dass der Faden verheddert und die Packung nicht mehr geschlossen werden kann.

Der Erfindung liegt die Aufgabe zugrunde, einen Spulenträger mit einer Spule aus einem Schneidfaden für einen Freischneider derart auszubilden, dass einerseits beim Aufwickeln der Spule auf den Spulenträger der Arbeitsaufwand gering ist und andererseits eine einfache Entnahme von Schneidfadenabschnitten vom Spulenträger möglich sein soll, ohne dass sich die Spule selbstständig abwickelt oder sich der Schneidfaden verheddert.

Zur Lösung der Aufgabe ist nach der Erfindung ein Spulenträger mit einer Spule aus einem Schneidfaden für einen Freischneider vorgesehen, wobei die Spule einen inneren Endabschnitt des Schneidfadens und einen äußeren Endabschnitt des Schneidfadens aufweist. Der Spulenträger besteht aus einem zentralen Wickelkern, wobei der Wickelkern eine äußere Mantelfläche hat. Der Wickelkern weist ein erstes axiales Ende und ein zweites axiales Ende auf, wobei an den axialen Enden über die Mantelfläche des Wickelkerns überstehende Sicherungselemente zur Lagefixierung der auf dem Wickelkern gewickelten Spule des Schneidfadens vorgesehen sind. An dem ersten axialen Ende des Wickelkerns ist das Sicherungselement von einer Trägerplatte gebildet, wobei die Trägerplatte eine Längsmittelachse aufweist. Die Abmessung der Trägerplatte weist in Richtung ihrer Längsmittelachse eine größere Erstreckung auf als quer zu ihrer Längsmittelachse, derart, dass die Trägerplatte in einer ersten Radialrichtung des Wickelkerns größer ist als in einer zweiten Radialrichtung des Wickelkerns. Der Wickelkern ist drehfest mit der Trägerplatte und den an dem zweiten axialen Ende vorgesehenen weiteren Sicherungselementen verbunden.

Der Spulenträger nach der Erfindung zeigt einen inneren, zentralen Wickelkern, dessen Enden über den Umfang des Wickelkerns überstehende Sicherungselemente aufweisen, die zur Lagefixierung der auf dem Wickelkern gewickelten Spule dienen. An dem einen Ende des Wickelkerns ist als Sicherungselement eine Trägerplatte vorgesehen, wobei die Abmessung der Trägerplatte in zumindest einer Radialrichtung des Wickelkerns größer ist als der Außendurchmesser der auf dem Wickelkern gehaltenen Spule. Der Wickelkern ist in besonderer Ausbildung drehfest mit der Trägerplatte verbunden, so dass zum Aufwickeln des Schneidfadens auf den Wickelkern die Trägerplatte zusammen mit der Spule rotiert. Dadurch kann in einfacher Weise der Schneidfaden auf den Spulenträger aufgewickelt werden.

Als Sicherungselemente sind an dem anderen Ende des Wickelkerns Radialflansche ausgebildet, wobei die Spule einen äußeren Spulendurchmesser aufweist, und die Radialflansche über den Außendurchmesser der Spule des Schneidfadens überstehen. Zweckmäßig liegen die Radialflansche in Umfangsrichtung der Spule mit Abstand zueinander. Dabei kann ein Radialflansch einen Kopfabschnitt und einen Fußabschnitt aufweisen, wobei der Fußabschnitt auf Höhe der Mantelfläche des Wickelkerns beginnt.

Ein Radialflansch weist einen Kopfabschnitt und einen Fußabschnitt auf, wobei im Kopfabschnitt, der ein freies Ende eines Radialflansches bildet, zumindest eine Klemmöffnung für einen Endabschnitt des Schneidfadens ausgebildet ist. Der Schneidfaden auf dem Spulenträger kann so an seinem losen äußeren Endabschnitt in der Klemmöffnung fixiert werden. Damit ist einem unabsichtlichen Abwickeln der Spule vom Spulenträger entgegengewirkt.

Vorteilhaft sind im Kopfabschnitt eines Radialflansches mehrere Klemmöffnungen mit unterschiedlichen Abmessungen ausgebildet, die für Schneidfäden mit unterschiedlichen Fadendurchmessern genutzt werden können. Ein und derselbe Spulenträger kann so für Schneidfäden unterschiedlicher Durchmesser verwendet werden.

An einem axialen Ende des Wickelkerns ist in der Mantelfläche des Wickelkerns ein Klemmelement zum Festlegen des inneren Endabschnittes des Schneidfadens vorgesehen. Das Klemmelement ist bevorzugt als eine in der Umfangswand des Wickelkerns ausgebildete Klemmzunge gestaltet, die ein freies Ende aufweist. Insbesondere endet das freie Ende der Klemmzunge in einem Fenster der Trägerplatte.

In Weiterbildung der Erfindung sind in der Trägerplatte fensterartige Durchbrüche vorgesehen, die unmittelbar an die Mantelfläche des Wickelkerns anschließen. Dabei sind die Durchbrüche der Trägerplatte und die Radialflansche des Wickelkerns in gleicher Umfangslage am Wickelkern angeordnet und haben in Umfangsrichtung des Wickelkerns eine größere Erstreckung als die Radialflansche selbst. In Axialrichtung des Wickelkerns gesehen, liegen die Radialflansche dabei über den Durchbrüchen, so dass der Wickelkern, die Trägerplatte und die Sicherungselemente als einteiliges Bauteil ausgebildet sein können, insbesondere als einteiliges Kunststoffspritzbauteil. Die Trägerplatte selbst ist nicht rotationssymmetrisch, da sie in Richtung der Längsmittelachse eine größere Erstreckung aufweist als quer zu ihrer Längsmittelachse. Beim Aufwickeln auf der Spindel einer Wickelmaschine ergibt sich dadurch zwar eine leichte Unwucht, die jedoch von untergeordneter Bedeutung ist und keinen Nachteil bedeutet. Es kann vorteilhaft sein, die Unwucht durch entsprechende Ausgleichsmaßnahmen an der Wickelmaschine selbst auszugleichen.

Der Wickelkern selbst ist vorzugsweise rotationssymmetrisch, insbesondere als Wickelzylinder ausgebildet, während die Trägerplatte nicht rotationssymmetrisch ausgebildet sein kann.

Um den Spulenträger, also das einteilige Bauteil aus Trägerplatte, Wickelkern und Radialflanschen, rotierend anzutreiben, ist vorgesehen, dass der Wickelkern hohl ausgebildet ist und einen inneren, radial einragenden Mitnehmer aufweist, der bevorzugt als Rippe ausgebildet ist. Die Rippe greift in eine Mitnahmenut einer Antriebsspindel einer Wickelmaschine ein, so dass in einfacher Weise eine Rotationsverbindung zwischen der Antriebsspindel und dem Spulenträger hergestellt ist.

Die etwa rechteckig ausgebildete Trägerplatte ist derart gestaltet, dass ein Aufnahmefeld für ein Klebeetikett oder dgl. Beschriftung ausgebildet ist.

Im Rand der Trägerplatte ist eine Öffnung zum Eingriff eines Aufhängeelementes ausgebildet, so dass der Spulenträger zusammen mit der auf dem Wickelkern aufgewickelten Spule in einfacher Weise in einen Warenpräsentationsträger eingehängt werden kann. Die Öffnung erstreckt sich dabei auf beiden Seiten der Längsmittelachse der Trägerplatte und wird insbesondere von der Längsmittelachse der Trägerplatte geteilt, vorzugsweise symmetrisch geteilt.

Weitere Merkmale der Erfindung ergeben sich aus den weiteren Ansprüchen, der Beschreibung und der Zeichnung, in der ein nachstehend im Einzelnen beschriebenes Ausführungsbeispiel der Erfindung dargestellt ist. Es zeigen:
- Fig. 1: in perspektivischer Ansicht einen erfindungsgemäßen Spulenträger mit einer Spule aus einem Schneidfaden für einen Freischneider,
- Fig. 2: in perspektivischer Ansicht einen Spulenträger gemäß Fig. 1 ohne Spule,
- Fig. 3: eine Ansicht auf den Spulenträger nach Fig. 2 von vorne,
- Fig. 4: eine Seitenansicht des Spulenträgers nach Fig. 2 auf einer Antriebsspindel,
- Fig. 5: eine Ansicht auf den Spulenträger nach Fig. 3 von hinten,
- Fig. 6: eine Ansicht auf den Spulenträger von oben,
- Fig. 7: eine Ansicht auf den Spulenträger von unten.

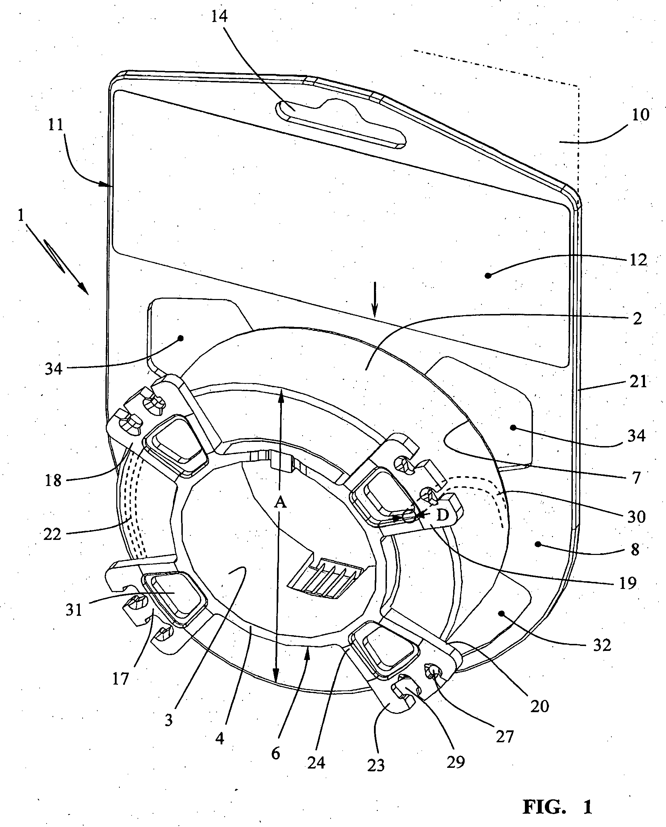

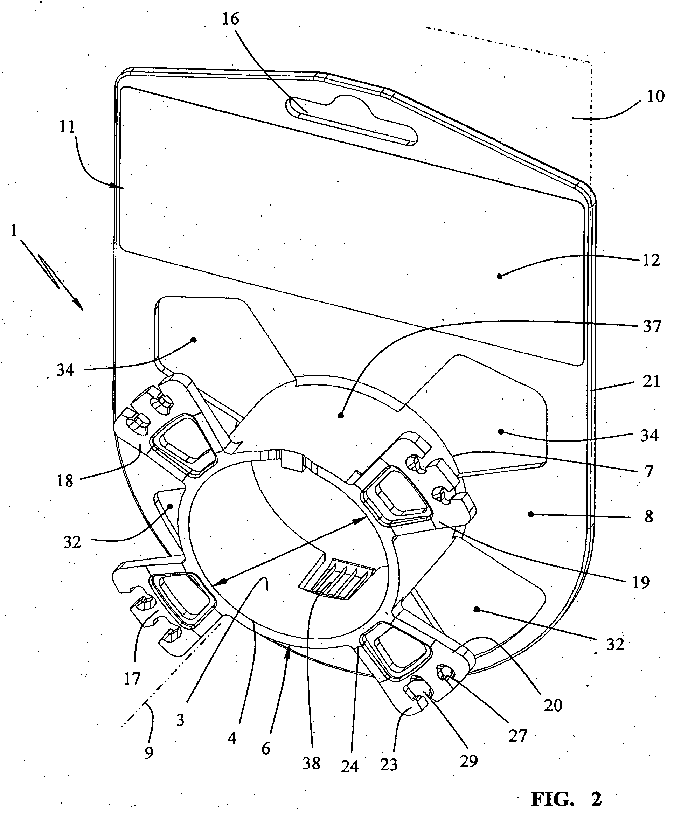

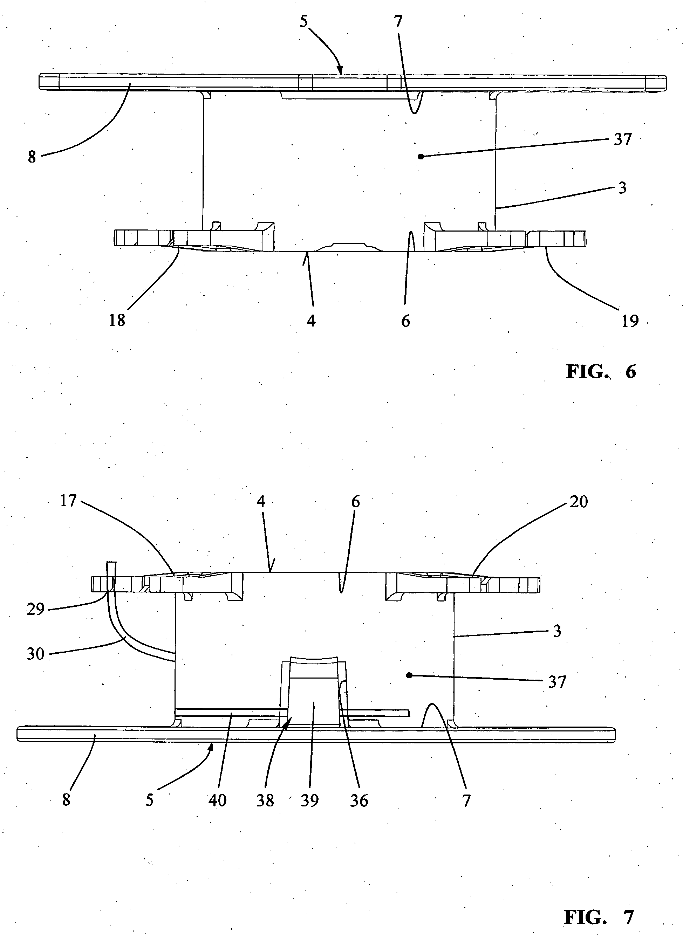

Der in Fig. 1 gezeigte Spulenträger 1 ist in Fig. 2 ohne eine auf dem Spulenträger gehaltene Spule 2 dargestellt. Der Spulenträger 1 besteht im Wesentlichen aus einem inneren, zentralen Wickelkern 3, der vorzugsweise hohl ausgebildet ist und an seinen Stirnseiten 4 und 5 (Figuren 6, 7) offen ist. Im gezeigten Ausführungsbeispiel ist der Wickelkern 3 zylindrisch ausgebildet, stellt somit einen rotationssymmetrischen Wickelzylinder dar.

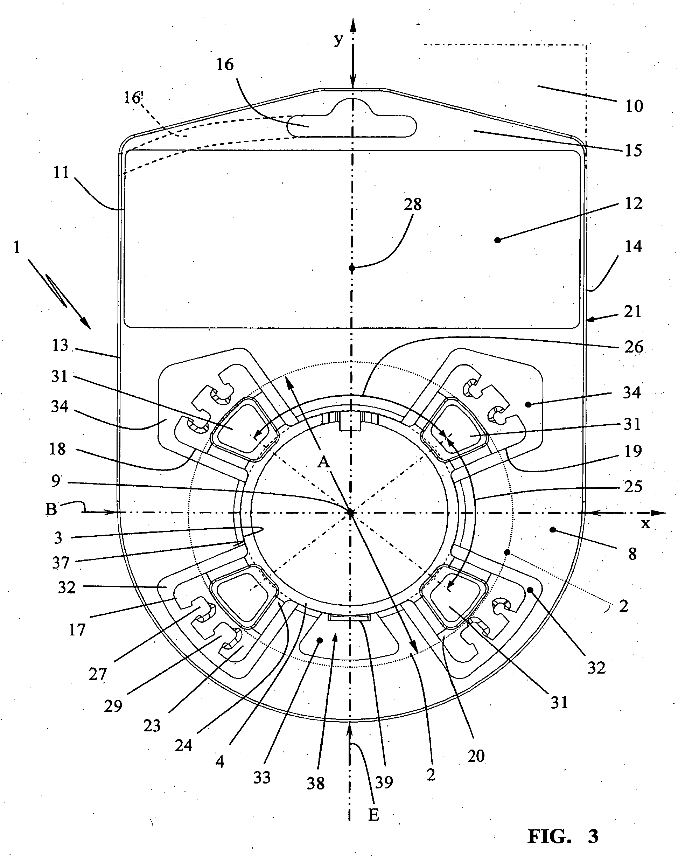

Der Wickelkern 3 weist ein erstes axiales Ende 7 und ein zweites axiales Ende 6 auf. An dem ersten, hinteren Ende 7 ist einteilig eine Trägerplatte 8 angeformt, wobei die Längsmittelachse 9 des Wickelkerns 3 lotrecht auf der Ebene 10 der Trägerplatte 8 steht. Wie Fig. 3 zeigt, liegt die Ebene 10 der Trägerplatte 8 in einem x/y-Koordinatensystem, dessen y-Achse von der Längsmittelachse 28 des Spulenträgers 1 gebildet ist, wobei die Längsmittelachse 28 des Spulenträgers 1 zugleich die Längsmittelachse 28 der Trägerplatte 8 ist. Die Z-Achse des Raumkoordinatensystems ist durch die Längsmittelachse 9 des Wickelkerns 3 bildet. In der einen Radialrichtung des Wickelkerns 3, im gezeigten Ausführungsbeispiel in Richtung der y-Achse, ist die Trägerplatte 8 größer als der Außendurchmesser A der auf dem Wickelkern 3 gehaltenen Spule 2 ausgebildet. Die Abmessung der Trägerplatte 8 hat in y-Richtung eine Erstreckung E (Fig. 3), die größer ist als die quer zur Längsmittelachse 28 in x-Richtung der Trägerplatte 8 gemessene Breite B (Fig. 3). Wie Fig. 3 zeigt, ist die Trägerplatte 8 unterhalb der x-Achse, d. h. unterhalb der Längsmittelachse 9 des Wickelkerns 3 halbrund ausgebildet, wobei der Kreismittelpunkt der Rundung auf der Längsmittelachse 9 des Wickelkerns 3 liegt. Oberhalb der x-Achse ist die Trägerplatte 8 im Wesentlichen rechteckig bis quadratisch ausgebildet, wobei in einem Bereich oberhalb der auf dem Wickelkern 3 gehaltenen Spule 2 ein Aufnahmefeld 11 für eine Warenauszeichnung vorgesehen ist, z. B. ein Klebeetikett, ein Beschriftungsfeld oder dgl.. Im gezeigten Ausführungsbeispiel ist das Aufnahmefeld 11 als leichte Ansenkung in der Trägerplatte 8 vorgesehen, wobei die Ansenkung 12 im Wesentlichen rechteckig ist und sich von der einen Hochkante 13 bis zur gegenüberliegenden Hochkante 14 der Trägerplatte 8 erstreckt. Oberhalb des Aufnahmefeldes 11 endet die Trägerplatte 8 in einem trapezförmigen Abschnitt 15, in dessen Zentrum eine Öffnung 16 zum Eingriff eines Aufhängeelementes einer Warenpräsentation oder dgl. vorgesehen ist. Die Öffnung 16 ist so gestaltet, dass sie sich auf beiden Seiten der Längsmittelachse 28 der Trägerplatte 8 erstreckt. Es kann vorteilhaft sein, die Öffnung als Schlitz 16' auszubilden, der zur Hochkante 13 der Trägerplatte offen ist. Ein derartiger Schlitz 16' ist in Fig. 3 strichliert dargestellt.

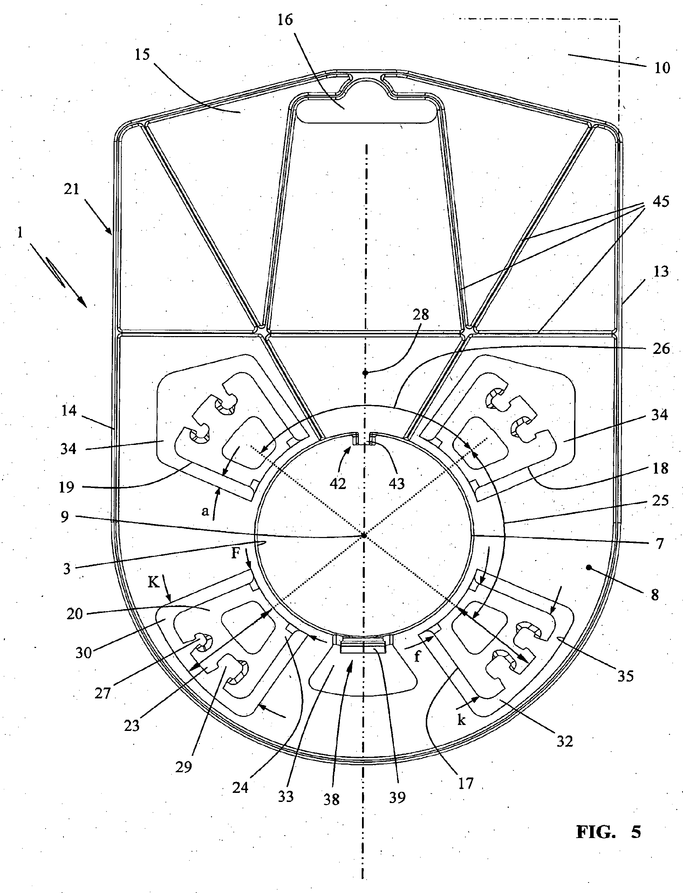

An dem anderen, vorderen Ende 6 des Wickelkerns 3 sind mehrere Radialflansche 17, 18, 19, 20 vorgesehen, die sich radial nach außen erstrecken. Die Trägerplatte 8 und die Radialflansche 17, 18, 19, 20 bilden Sicherungselemente zur Lagefixierung der auf dem Wickelkern 3 gewickelten Spule 2 des Schneidfadens 22. Wie die Ansicht in Fig. 3 zeigt, enden die Radialflansche 17, 18, 19, 20 innerhalb des Außenrandes 21 der Trägerplatte 8. Wie die Figuren ferner zeigen, ist die Trägerplatte 8 nicht rotationssymmetrisch zur Längsmittelachse 9 des Wickelkerns 3 ausgebildet, sondern hat in Richtung ihrer Längsmittelachse 28 eine größere Erstreckung E als quer zu ihrer Längsmittelachse 28. Bezogen auf das x/y-Koordinatensystem des Ausführungsbeispiels ist die Erstreckung der Trägerplatte 8 oberhalb der x-Achse mehr als 1,5fach so groß wie unterhalb der x-Achse. Vorteilhaft ist die Erstreckung oberhalb der x-Achse mehr als doppelt so groß wie unterhalb der x-Achse. Jeder Radialflansch 17, 18, 19,20 hat einen Kopfabschnitt 23, der breiter als der Fußabschnitt 24 ausgebildet ist. Wie in Fig. 5 wiedergegeben, hat der Kopfabschnitt 23 eine Breite k, die - in Umfangsrichtung des Wickelkerns 3 gemessen - größer als die Breite f des Fußabschnittes ist. Im gezeigten Ausführungsbeispiel hat der Kopfabschnitt 23 etwa die 1,5fache Breite f des Fußabschnittes 24 des Radialflansches.

Über den Umfang des Wickelkerns 3 sind mehrere Radialflansche 17, 18, 19, 20 vorgesehen, wobei die Radialflansche in Umfangsrichtung des Wickelkerns 3 mit Abstand zueinander liegen. Im gezeigten Ausführungsbeispiel liegen vier Radialflansche 17, 18, 19, 20 einander paarweise diametral zur Längsmittelachse 9 des Wickelkerns 3 gegenüber. Die Anordnung ist so getroffen, dass ein Radialflansch zu seinen in Umfangsrichtung benachbarten Flanschen unterschiedliche Abstandswinkel aufweist. Im gezeigten Ausführungsbeispiel hat der Radialflansch 17 zum Radialflansch 18 einen Umfangsabstand 25 von 80°, während der Radialflansch 18 zum Radialflansch 19 einen Umfangsabstand von 100° aufweist. Entsprechend hat der Radialflansch 19 zum Radialflansch 20 wiederum einen kleineren Umfangsabstand 25 von ca. 80°, während der Radialflansch 20 zum Radialflansch 17 einen größeren Umfangsabstand 26 von etwa 100° aufweist. Die Anordnung ist so getroffen, dass die größeren Umfangsabstände 26 von der Längsmittelachse 28 der Trägerplatte bzw. von der y-Achse eines theoretischen Koordinatensystems halbiert werden. Im gezeigten Ausführungsbeispiel entspricht die y-Achse der Längsmittelachse 28 der Trägerplatte 8.

Die Radialflansche 17, 18, 19, 20 stehen - wie die Figuren 1 und 3 zeigen - über den Außendurchmesser A der Spule 2 radial über, wobei in zumindest einem Kopfabschnitt 23 eines Radialflansches eine Klemmöffnung 27 bzw. 29 für einen Endabschnitt 30 des Schneidfadens 22 ausgebildet ist. In Fig. 1 und 7 ist schematisch dargestellt, wie der Endabschnitt 30 eines Schneidfadens 22 in einer derartigen Klemmöffnung 27 oder 29 fixiert werden kann.

Im gezeigten Ausführungsbeispiel sind in jedem Kopfabschnitt 23 eines Radialflansches 17, 18, 19, 20 eine Klemmöffnung 27 bzw. 29 vorgesehen, wobei in einem Kopfabschnitt 23 bevorzugt mehrere Klemmöffnungen vorgesehen sind, insbesondere mehrere Klemmöffnungen 27,29 für Schneidfäden 22 mit unterschiedlichem Fadendurchmesser D.

In jedem Radialflansch 17, 18, 19, 20 ist ferner ein Durchbruch 31 ausgebildet, der sich vom Fußabschnitt 24 bis unter den Kopfabschnitt 23 erstreckt und eine Kontur aufweist, die vorteilhaft der Außenkontur des Radialflansches 17, 18, 19,20 entspricht.

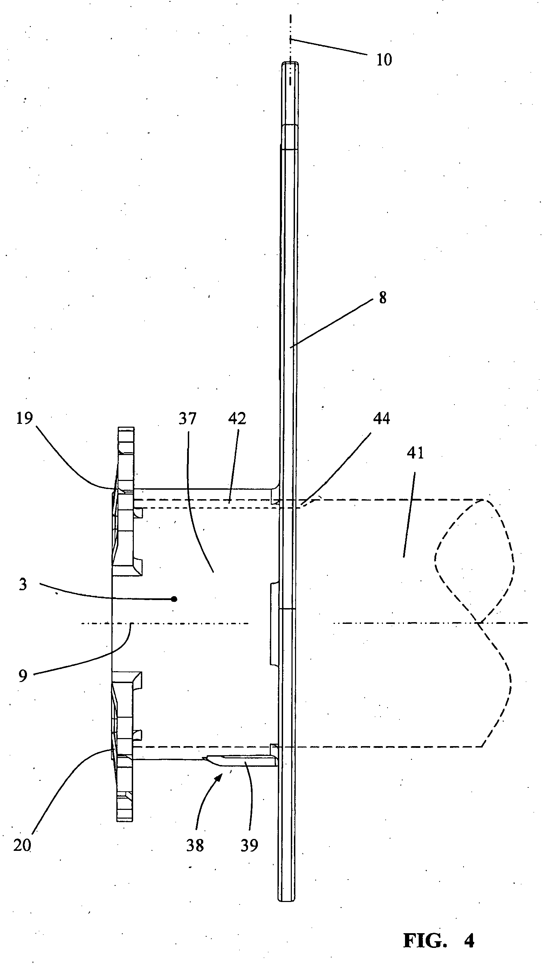

Wie insbesondere die Figuren 2 bis 5 zeigen, sind in der Trägerplatte 8 Ausnehmungen 32 und 34 vorgesehen, die in der Ansicht von vorne (Fig. 3) bzw. in der Ansicht von hinten (Fig. 5) örtlich auf der Höhe der Radialflansche 17, 18, 19, 20 liegen, also in den Ansichten der Figuren 3 und 5 übereinander liegen. Die unterhalb der x-Achse liegenden Ausnehmungen 32 der Trägerplatte 8 haben eine Innenkontur 35, die etwa der Außenkontur des jeweiligen Radialflansches 17 und 20 entspricht. Die Fläche der Durchbrüche 31 ist dabei größer ausgebildet als die Fläche der Radialflansche 17 und 20, wobei zur Innenkontur 35 ein Abstand a vorgesehen ist. In der Ansicht von vorne - Fig. 3 - und in der Ansicht von hinten - Fig. 5 - liegen die Radialflansche 17, 18, 19,20 über den Ausnehmungen 32.

Die Ausnehmungen 34 oberhalb der x-Achse des gedachten Koordinatensystems sind im Bereich der Kopfabschnitte 23 der Radialflansche 18 und 19 trapezförmig ausgebildet; die Ausnehmungen 34 entsprechen ansonsten im Wesentlichen der Form der Ausnehmungen 32 mit dem entsprechenden Abstand a zur Innenkontur 35.

Wie Fig. 7 zeigt, ist im Bereich des Endes 7 des Wickelkerns 3 ein weiteres Fenster 33 vorgesehen, welches den Rand des Endes 7 relativ zur Trägerplatte 8 freilegt. In diesem Rand 36 ist in der Mantelfläche 37 des Wickelkerns 3 ein Klemmelement 38 zum Festlegen eines inneren Endabschnittes 40 des Schneidfadens 22 vorgesehen. Im gezeigten Ausführungsbeispiel ist das Klemmelement 38 als axiale Klemmzunge 39 gestaltet, deren freies Ende in dem Fenster 33 der Trägerplatte 8 liegt.

Die Ausnehmungen 32 und 34 und das Fenster 33 in der Trägerplatte 8 schließen unmittelbar an die Mantelfläche 37 des Wickelkerns 3 an. Dabei liegen - wie vorstehend beschrieben - die Ausnehmungen 32, 34 in der Trägerplatte 8 und die Radialflansche 17, 18, 19,20 am Ende 6 des Wickelkerns 3 in gleicher Umfangslage am Wickelkern 3. Jeder Radialflansch 17, 18, 19, 20 hat einen Kopfabschnitt 23 und einen Fußabschnitt 24 wobei der Fußabschnitt 24 auf Höhe der Mantelfläche 37 des Wickelkerns 3 beginnt. In Umfangsrichtung haben die Durchbrüche 32 und 34 jeweils eine größere Erstreckung als die Radialflansche 17, 18, 19 und 20. So haben die Durchbrüche 32 und 34 im Fußbereich eine in Umfangsrichtung gemessene Breite F, die größer als die Breite f des Fußabschnittes eines Radialflansches ist. Im Kopfbereich haben die Durchbrüche 32 und 34 eine in Umfangsrichtung gemessene Breite K, die größer als die Breite k des Kopfabschnittes eines Radialflansches ist. Diese Ausgestaltung ermöglicht eine einteilige Fertigung des Spulenträgers 1 z. B. aus Kunststoff in einer Form, z. B. einer Spritzgussform.

In besonderer Ausgestaltung der Erfindung sind der Wickelkern 3, die Trägerplatte 8 und die Sicherungselemente, d. h. die Radialflansche 17, 18, 19, 20 als einteiliges Bauteil ausgebildet, insbesondere aus Kunststoff gefertigt. Das einteilige Bauteil aus Trägerplatte, Wickelkern und Sicherungselementen kann - da der Wickelkern 3 hohl ist - auf eine Antriebsspindel 41 aufgeschoben werden, wobei der Wickelkern 3 einen inneren, radial einragenden Mitnehmer 42 aufweist. Der Mitnehmer 42 ist zweckmäßig als sich in Richtung der Längsmittelachse 9 des Wickelkerns 3 erstreckende Rippe 43 ausgebildet, die in eine als Längsnut ausgebildete Mitnahmenut 44 der Antriebsspindel 41 eingreift. Die Mitnahmenut 44 und die Rippe 43 wirken als Keilkupplung.

Zum Bestücken des Spulenträgers 3 mit einer Spule 2 aus einem Schneidfaden 22 für einen Freischneider wird der Spulenträger 3 auf das freie Ende der Antriebsspindel 41 aufgeschoben und um die Längsachse 9 des Wickelkerns 3 rotierend angetrieben. Der Schneidfaden 22 wird - vor Beginn der Rotation - am Klemmelement 38 festgelegt, wie in Fig. 7 schematisch dargestellt ist. Bei beginnender Rotation wird der Schneidfaden 22 auf der Mantelfläche 37 des Wickelkerns 3 aufgewickelt, wobei eine Führung des Schneidfadens 22 derart vorgesehen ist, dass sich der Schneidfaden 22 gleichmäßig Lage für Lage aufwickelt. Ist der gewünschte Außendurchmesser A der Spule 2 erreicht, wird der Schneidfaden 22 abgelängt und - wie z. B. in Fig. 1 dargestellt - in einer Klemmöffnung 27 oder 29 eines Radialflansches 17 bis 20 gesichert gehalten. Es kann zweckmäßig sein, den Spulenkörper 2 durch eine Schrumpffolie zu fixieren, so dass ein Abwickeln während des Transports der Schneidfadenspule auf dem Spulenträger 3 sicher verhindert ist.

Für einen Zugriff auf die Spule entfernt der Benutzer eine ggf. vorgesehene Schrumpffolie und wickelt den Schneidfaden 22 auf die Länge ab, die er benötigt. Nach Ablängen des Schneidfadens wird der verbleibende Endabschnitt 30 wieder in einer der Klemmöffnungen 27 bzw. 29 der Radialflansche fixiert, so dass ein selbsttätiges Abspulen des Schneidfadens sicher ausgeschlossen ist.

Zur Versteifung der Trägerplatte 8 können - wie in Fig. 5 dargestellt - Versteifungsstege 45 vorgesehen sein, die sich zwischen dem Außenrand 21 der Trägerplatte 8 auf der Rückseite der Trägerplatte 8 erstrecken.

## Patentansprüche

1. Spulenträger mit einer Spule (2) aus einem Schneidfaden (22) für einen Freischneider,
• die Spule (2) weist einen inneren Endabschnitt (40) des Schneidfadens (22) und einen äußeren Endabschnitt (30) des Schneidfadens (22) auf;
• der Spulenträger (1) besteht aus einem zentralen Wickelkern (3);
• der Wickelkern (3) hat eine äußere Mantelfläche (37);
• der Wickelkern (3) hat ein erstes axiales Ende (7) und ein zweites axiales Ende (6);
• wobei an den axialen Enden (6, 7) über die Mantelfläche (37) des Wickelkerns (3) überstehende Sicherungselemente zur Lagefixierung der auf dem Wickelkern (3) gewickelten Spule (2) des Schneidfadens (22) vorgesehen sind;
• wobei an dem ersten axialen Ende (7) des Wickelkerns (3) das Sicherungselement von einer Trägerplatte (8) gebildet ist,
• und die Trägerplatte (8) eine Längsmittelachse (28) aufweist,
• wobei die Abmessung der Trägerplatte (8) in Richtung der Längsmittelachse (28) eine größere Erstreckung aufweist als quer zu ihrer Längsmittelachse (28),
• derart, dass die Trägerplatte (8) in einer ersten Radialrichtung des Wickelkerns (3) größer ist als in einer zweiten Radialrichtung des Wickelkerns (3);
• und der Wickelkern (3) drehfest mit der Trägerplatte (8) und den an dem zweiten axialen Ende (6) vorgesehenen weiteren Sicherungselementen verbunden ist.

2. Spulenträger nach Anspruch 1,
**dadurch gekennzeichnet, dass** die Spule (2) einen äußeren Spulendurchmesser (A) aufweist, dass die Sicherungselemente an dem zweiten axialen Ende (6) des Wickelkerns (3) als Radialflansche (17, 18, 19, 20) ausgebildet sind, und dass die Radialflansche (17, 18, 19,20) über den Außendurchmesser (A) der Spule (2) des Schneidfadens (22) überstehen.

3. Spulenträger nach Anspruch 2,
**dadurch gekennzeichnet, dass** die Radialflansche (17, 18, 19, 20) in Umfangsrichtung der Spule (2) mit Abstand zueinander liegen.

4. Spulenträger nach Anspruch 2,
**dadurch gekennzeichnet, dass** ein Radialflansch (17, 18, 19, 20) einen Kopfabschnitt (23) und einen Fußabschnitt (24) aufweist, und der Fußabschnitt (24) auf Höhe der Mantelfläche (37) des Wickelkerns (3) beginnt.

5. Spulenträger nach Anspruch 2,
**dadurch gekennzeichnet, dass** ein Radialflansch (17, 18, 19, 20) einen Kopfabschnitt (23) und einen Fußabschnitt (24) aufweist und im Kopfabschnitt (23) eines Radialflansches (17, 18, 19, 20) eine Klemmöffnung (27) für den äußeren Endabschnitt (30) des Schneidfadens (22) ausgebildet ist.

6. Spulenträger nach Anspruch 5,
**dadurch gekennzeichnet, dass** im Kopfabschnitt (23) eines Radialflansches (17, 18, 19, 20) mehrere Klemmöffnungen (27, 29) für Schneidfäden (22) mit unterschiedlichem Fadendurchmesser (D) ausgebildet sind.

7. Spulenträger nach Anspruch 2,
**dadurch gekennzeichnet, dass** im Radialflansch (17, 18, 19, 20) ein Durchbruch (31) ausgebildet ist.

8. Spulenträger nach Anspruch 1,
**dadurch gekennzeichnet, dass** in der Mantelfläche (37) des Wickelkerns (3) ein Klemmelement (38) zum Festlegen des inneren Endabschnittes (40) des Schneidfadens (22) vorgesehen ist.

9. Spulenträger nach Anspruch 8,
**dadurch gekennzeichnet, dass** das Klemmelement (38) eine in der Mantelfläche (37) des Wickelkerns (3) ausgebildete Klemmzunge (39) ist.

10. Spulenträger nach Anspruch 9,
**dadurch gekennzeichnet, dass** die Klemmzunge (39) ein freies Ende aufweist und das freie Ende der Klemmzunge (39) in einem Fenster (33) der Trägerplatte (8) endet.

11. Spulenträger nach Anspruch 3,
**dadurch gekennzeichnet, dass** die Trägerplatte (8) fensterartige Ausnehmungen (32, 34) aufweist, die unmittelbar an die Mantelfläche (37) des Wickelkerns (3) anschließen.

12. Spulenträger nach Anspruch 11,
**dadurch gekennzeichnet, dass** die Ausnehmungen (32, 34) der Trägerplatte (8) und die Radialflansche (17, 18, 19, 20) des Wickelkerns (3) in gleicher Umfangslage am Wickelkern (3) angeordnet sind.

13. Spulenträger nach Anspruch 12,
**dadurch gekennzeichnet, dass** die Ausnehmungen (32, 34) in Umfangsrichtung des Wickelkerns (3) eine größere Erstreckung haben als die Radialflansche (17, 18, 19, 20).

14. Spulenträger nach Anspruch 12,
**dadurch gekennzeichnet, dass** in Axialrichtung des Wickelkerns (3) gesehen, die Radialflansche (17, 18, 19, 20) über den Ausnehmungen (32, 34) der Trägerplatte (8) liegen.

15. Spulenträger nach Anspruch 1,
**dadurch gekennzeichnet, dass** der Wickelkern (3) ein Wickelzylinder ist.

16. Spulenträger nach Anspruch 1,
**dadurch gekennzeichnet, dass** der Wickelkern (3), die Trägerplatte (8) und die Sicherungselemente ein einteiliges Bauteil bilden.

17. Spulenträger nach Anspruch 1,
**dadurch gekennzeichnet, dass** der Wickelkern (3) hohl ist und einen inneren, radial nach innen einragenden Mitnehmer (42) aufweist.

18. Spulenträger nach Anspruch 17,
**dadurch gekennzeichnet, dass** der Mitnehmer (42) als Rippe (43) ausgebildet ist.

19. Spulenträger nach Anspruch 1,
**dadurch gekennzeichnet, dass** die Trägerplatte (8) ein Aufnahmefeld (11) für ein Klebeetikett oder dgl. Beschriftung aufweist.

20. Spulenträger nach Anspruch 1,
**dadurch gekennzeichnet, dass** die Trägerplatte (8) eine Öffnung (16) zum Eingriff eines Aufhängeelementes oder dgl. aufweist, wobei sich die Öffnung (16) auf beiden Seiten der Längsmittelachse (28) der Trägerplatte (8) erstreckt.

## Claims

1. Coil carrier with a coil (2) of a cutting thread (22) for a free cutter, wherein
• the coil (2) has in inner end section (40 of the cutting thread (22) and an outer end section (30) of the cutting thread (22);
• the coil carrier (1) consists of a central winding core (3);
• the winding core (3) has an outer surface (37);
• the winding core (3) has a first axial end (7) and a second axial end (6);
• wherein securing elements which project beyond the outer surface (37) of the winding core (3) are provided at the two axial ends (6, 7) for locating the coil (2) of the cutting thread (22) wound onto the winding core (3);
• wherein the securing element at the first axial end (7) of the winding core (3) is represented by a backing plate (8),
• and the backing plate (8) has a central longitudinal axis (28),
• wherein the dimension of the backing plate (8) is larger in the direction of the central longitudinal axis (28) than perpendicular to the central longitudinal axis (28),
• so that the backing plate (8) is larger in a first radial direction of the winding core (3) than in a second radial direction of the winding core (3);
• and the winding core (3) is non-rotatably joined to the backing plate (8) and to the further securing elements provided at the second axial end (6).

2. Coil carrier according to claim 1,
**characterised in that** the coil (2) has an outer coil diameter (A), **in that** the securing elements at the second axial end (6) of the winding core (3) are designed as radial flanges (17, 18, 19, 20), and **in that** the radial flanges (17, 18, 19, 20) project beyond the outer diameter (A) of the coil (2) of the cutting thread (22).

3. Coil carrier according to claim 2,
**characterised in that** the radial flanges (17, 18, 19, 20) are arranged at a distance from one another in the circumferential direction of the coil (2).

4. Coil carrier according to claim 2,
**characterised in that** a radial flange (17, 18, 19, 20) has a head section (23) and a foot section (24), and **in that** the foot section (24) starts at the level of the outer surface (37) of the winding core (3).

5. Coil carrier according to claim 2,
**characterised in that** a radial flange (17, 18, 19, 20) has a head section (23) and a foot section (24), and **in that** a clamping opening (27) for the outer end section (30) of the cutting thread (22) is formed in the head section (23) of a radial flange (17, 18, 19, 20).

6. Coil carrier according to claim 5,
**characterised in that** several clamping openings (27, 29) for cutting threads (22) with different thread diameters (D) are formed in the head section (23) of a radial flange (17, 18, 19, 20).

7. Coil carrier according to claim 2,
**characterised in that** a through-hole (31) is formed in the radial flange (17, 18, 19, 20).

8. Coil carrier according to claim 1,
**characterised in that** a clamping element (38) for locating the inner end section (40) of the cutting thread (22) is provided in the outer surface (37) of the winding core (3).

9. Coil carrier according to claim 8,
**characterised in that** the clamping element (38) is a clamping blade (39) formed in the outer surface (37) of the winding core (3).

10. Coil carrier according to claim 9,
**characterised in that** the clamping blade (39) has a free end and the free end of the clamping blade (39) terminates in a window (33) of the backing plate (8).

11. Coil carrier according to claim 3,
**characterised in that** the backing plate (8) has window-like recesses (32, 34), which immediately adjoin the outer surface (37) of the winding core (3).

12. Coil carrier according to claim 11,
**characterised in that** the recesses (32, 34) of the backing plate (8) and the radial flanges (17, 18, 19, 20) of the winding core (3) are arranged in the same circumferential position on the winding core (3).

13. Coil carrier according to claim 12,
**characterised in that** the recesses (32, 34) have a larger dimension in the circumferential direction of the winding core (3) than the radial flanges (17, 18, 19,20).

14. Coil carrier according to claim 12,
**characterised in that**, if viewed in the axial direction of the winding core (3), the radial flanges (17, 18, 19, 20) lie above the recesses (32, 34) of the backing plate (8).

15. Coil carrier according to claim 1,
**characterised in that** the winding core (3) is a winding cylinder.

16. Coil carrier according to claim 1,
**characterised in that** the winding core (3), the backing plate (8) and the securing elements form a single-piece component.

17. Coil carrier according to claim 1,
**characterised in that** the winding core (3) is hollow and comprises an interior driver (42), which projects radially inwards.

18. Coil carrier according to claim 17,
**characterised in that** the driver (42) is designed as a rib (43).

19. Coil carrier according to claim 1,
**characterised in that** the backing plate (8) comprises a location panel (11) for an adhesive label or for lettering.

20. Coil carrier according to claim 1,
**characterised in that** the backing plate (8) comprises an opening (16) for engagement with a hanging element or the like, the opening (16) extending on both sides of the central longitudinal axis (28) of the backing plate (8).

## Revendications

1. Support de bobine avec une bobine (2) composée d'un fil de coupe (22) pour une débroussailleuse,
• la bobine (2) comporte un tronçon d'extrémité intérieur (40) du fil de coupe (22) et un tronçon d'extrémité extérieur (30) du fil de coupe (22);
• le support de bobine (1) se compose d'un noyau d'enroulement central (3);
• le noyau d'enroulement (3) présente une surface latérale extérieure (37);
• le noyau d'enroulement (3) présente une première extrémité axiale (7) et une seconde extrémité axiale (6);
• étant précisé qu'il est prévu, sur les extrémités axiales (6, 7), des éléments de blocage qui dépassent de la surface latérale (37) du noyau d'enroulement (3), pour fixer en position la bobine (2) du fil de coupe (22) enroulé sur le noyau d'enroulement (3);
• étant précisé que sur la première extrémité axiale (7) du noyau d'enroulement (3), l'élément de blocage est formé par une plaque de support (8),
• et que la plaque de support (8) présente un axe longitudinal médian (28),
• étant précisé que la dimension de la plaque de support (8) présente une plus grande extension dans le sens de l'axe longitudinal médian (28) que transversalement par rapport audit axe longitudinal médian (28),
• de telle sorte que la plaque de support (8) est plus grande dans un premier sens radial du noyau d'enroulement (3) que dans un second sens radial du noyau d'enroulement (3);
• et que le noyau d'enroulement (3) est relié, fixe en rotation, à la plaque de support (8) et aux autres éléments de blocage prévus sur la seconde extrémité axiale (6).

2. Support de bobine selon la revendication 1,
**caractérisé en ce que** la bobine (2) présente un diamètre de bobine extérieur (A), **en ce que** les éléments de blocage sont conçus sur la seconde extrémité axiale (6) du noyau d'enroulement (3) comme des rebords radiaux (17, 18, 19, 20), et **en ce que** les rebords radiaux (17, 18, 19, 20) dépassent du diamètre extérieur (A) de la bobine (2) de fil de coupe (22).

3. Support de bobine selon la revendication 2,
**caractérisé en ce que** les rebords radiaux (17, 18, 19, 20) sont espacés les uns des autres dans le sens circonférentiel de la bobine (2).

4. Support de bobine selon la revendication 2,
**caractérisé en ce qu'**un rebord radial (17, 18, 19, 20) comporte une partie supérieure (23) et une partie de base (24), et la partie de base (24) commence à la hauteur de la surface latérale (37) du noyau d'enroulement (3).

5. Support de bobine selon la revendication 2,
**caractérisé en ce qu'**un rebord radial (17, 18, 19, 20) comporte une partie supérieure (23) et une partie de base (24), et dans la partie supérieure (23) d'un rebord radial (17, 18, 19, 20) est formée une ouverture de serrage (27) pour le tronçon d'extrémité extérieur (30) du fil de coupe (22).

6. Support de bobine selon la revendication 5,
**caractérisé en ce que** dans la partie supérieure (23) d'un rebord radial (17, 18, 19, 20) sont formées plusieurs ouvertures de serrage (27, 29) pour des fils de coupe (22) de différents diamètres de fil (D).

7. Support de bobine selon la revendication 2,
**caractérisé en ce que** dans le rebord radial (17, 18, 19, 20) est formée une percée (31).

8. Support de bobine selon la revendication 1,
**caractérisé en ce qu'**il est prévu dans la surface latérale (37) du noyau d'enroulement (3) un élément de serrage (38) pour fixer le tronçon d'extrémité intérieur (40) du fil de coupe (22).

9. Support de bobine selon la revendication 8,
**caractérisé en ce que** l'élément de serrage (28) est une languette de serrage (39) formée dans la surface latérale (37) du noyau d'enroulement (3).

10. Support de bobine selon la revendication 9,
**caractérisé en ce que** la languette de serrage (39) présente une extrémité libre, et l'extrémité libre de la languette de serrage (39) se termine dans une fenêtre (33) de la plaque de support (8).

11. Support de bobine selon la revendication 3,
**caractérisé en ce que** la plaque de support (8) présente des évidements en forme de fenêtres (32, 34) qui font directement suite à la surface latérale du noyau d'enroulement (3).

12. Support de bobine selon la revendication 11,
**caractérisé en ce que** les évidements (32, 34) de la plaque de support (8) et les rebords radiaux (17, 18, 19, 20) du noyau d'enroulement (3) sont disposés sur le noyau d'enroulement (3) dans la même position circonférentielle.

13. Support de bobine selon la revendication 12,
**caractérisé en ce que** les évidements (32, 34) présentent dans le sens circonférentiel du noyau d'enroulement (3) une plus grande extension que les rebords radiaux (17, 18, 19, 20).

14. Support de bobine selon la revendication 12,
**caractérisé en ce que** les rebords radiaux (17, 18, 19, 20), vus dans le sens axial du noyau d'enroulement (3), se trouvent sur les évidements (32, 34) de la plaque de support (8).

15. Support de bobine selon la revendication 1,
**caractérisé en ce que** le noyau d'enroulement (3) est un cylindre d'enroulement.

16. Support de bobine selon la revendication 1,
**caractérisé en ce que** le noyau d'enroulement (3), la plaque de support (8) et les éléments de blocage forment un composant d'une seule pièce.

17. Support de bobine selon la revendication 1,
**caractérisé en ce que** le noyau d'enroulement (3) est creux et comporte un élément d'entraînement intérieur (42) qui dépasse radialement vers l'intérieur.

18. Support de bobine selon la revendication 17,
**caractérisé en ce que** l'élément d'entraînement (42) est conçu comme une nervure (43).

19. Support de bobine selon la revendication 1,
**caractérisé en ce que** la plaque de support (8) comporte une zone de réception (11) pour une étiquette adhésive ou une inscription similaire.

20. Support de bobine selon la revendication 1,
**caractérisé en ce que** la plaque de support (8) présente une ouverture (16) pour la pénétration d'un élément de suspension ou autre, étant précisé que ladite ouverture (16) s'étend des deux côtés de l'axe longitudinal médian (28) de la plaque de support (8).
